# EUROPEAN PATENT SPECIFICATION

(11) **EP 3 081 731 B1**
(45) Date of publication and mention of the grant of the patent: **25.09.2019**
(21) Application number: 15163629.7
(22) Date of filing: 15.04.2015
(51) Int. Cl.: E05C 17/30, G06K 9/00, B62D 15/02

(54) **VEHCILE EXIT ASSIST SYSTEM FOR OPTIMIZING EXIT FROM THE VEHICLE DURING PARKING**
FAHRZEUGAUSSTIEGSUNTERSTÜTZUNGSSYSTEM ZUR OPTIMIERUNG DES AUSSTEIGENS AUS EINEM FAHRZEUG BEIM PARKEN
SYSTÈME D'ASSISTANCE DE SORTIE DE VÉHICULE POUR L'OPTIMISATION DE SORTIE DUDIT VÉHICULE PENDANT LE STATIONNEMENT

(43) Date of publication of application: 19.10.2016
(73) Proprietor: Volvo Car Corporation, 40531 Göteborg (SE)
(72) Inventor: Klit Olesen, Anna, 2000 Fredriksberg (DK); Lohse, Henrik, 3060 Espergærde (DK); Farmansson, Malin, 41466 Göteborg (SE); Bonander, Martin, 44460 Stora Höga (SE)
(74) Representative: Valea AB

(56) References cited:
- JP-A- 2003 104 055
- JP-A- 2008 202 239
- JP-A- 2009 020 657
- JP-A- 2009 202 610
- JP-A- 2011 230 549
- US-A1- 2009 007 489

## Description

### Technical field

The present invention relates generally to a vehicle exit assist system for optimizing exit from the vehicle during parking.

### Background art

In prior art document EP2746137 A1 by the applicant, a driving assist system is disclosed, which enables the autonomous parking of a vehicle in a parking place and that uses information about the surroundings such as e.g. other parked vehicles, moving vehicles, dynamic or stationary objects, animals, other barriers or guiding means in a parking area to perform this task. In order to determine information about the surroundings one or more sensors may be utilized, such as a radar, a lidar, an IR camera and/or ultrasonic sensor among others.

In prior art it is known to use automatic parking control methods in automatic vehicles which decides the parking pathway based on passenger information, door space required for the door to be opened, as well as area input from the outside of the vehicle and which performs the automatic parking based thereon.

A drawback with the known art is that the methods only take into consideration passengers and passenger information which are associated to certain doors for exiting the vehicle. A further drawback with the known art is that there is still a prevailing risk of damage to the own vehicle or to surrounding vehicles during exit from the vehicle.

Patent document JP 2009 020 657 A, considered as the closest prior art according to the preamble of claims 1 and 11, relates according to its abstract to a parking support device and a program for parking support solving the problem to achieve parking support for enabling a crew to smoothly get off a vehicle. This parking support control part detects the physique of a crew, and determines the absolutely necessary open distance of a door when the crew gets off a vehicle from a door which is the closest to a seat where the crew is seated. Then, when a priority mode is set in the parking support control part, the vehicle is guided so that a space with the necessary open distance or more, that is, a space without any obstacle, about the door can be secured at the both sides of the vehicle at the door side as the object of the priority mode.

Patent document JP 2008 202 239 A relates according to its abstract to a door lock control method and a door lock operating device capable of improving safety in opening a door. A door lock control device comprises an image input part acquiring image data of the surroundings of a vehicle photographed from a camera mounted on the vehicle; a bird's-eye view conversion processing part converting the image data into bird's-eye view image data overlooking the surroundings of the vehicle; an image composing part displaying a door lock operating switch for locking or unlocking the door, on a screen which displays the bird's-eye view image based on the bird's eye view image data and a vehicle bird's-eye view image of the vehicle; and an obstacle detecting part detecting obstacles around the vehicle. The image composing part places a door lock operating switch in an operation prohibited state when detecting the obstacle by the obstacle detecting part.

### Summary of invention

An object of the present invention is to optimize the exit from a vehicle during parking for passenger and objects which reduces the risk of damage to the vehicle.

According to the invention a method performed by a vehicle exit assist system according to claim 1 is provided.

According to one embodiment, the method comprises:
- sensing the presence of driver/passengers and objects in the vehicle,
- determining driver/passenger and object location data in the vehicle based on sensed presence,
- transmitting driver/passenger and object location data to a park assist system for determining optimal parking route and parking position data,
- receiving the optimal parking position data from the park assist system,
- requesting available vehicle door space for each vehicle door having an associated driver/passenger or object based on the parking position data,
- receiving available vehicle door space for each vehicle door having an associated driver/passenger or object based on the parking position data,
- determining a minimum required vehicle door space for each vehicle door having an associated driver/passenger or object,
- activating a vehicle door counter force device for creating a force against opening the vehicle door if the available vehicle door space is less than a minimum required vehicle door space for each vehicle door having an associated driver/passenger or object.

According to one embodiment, the vehicle door counter force device is a door lock for locking the door, such as a child lock whereby opening of the vehicle door is prevented.

According to one embodiment, the vehicle door counter force device is a friction generating device which generates a resistance force opposite the direction of opening the door that may be overcome.

According to one embodiment, the method further comprises: sensing the weight of the sensed passenger and/or objects in the vehicle,
- determining the minimum required vehicle door space based on the sensed weight of the passenger and/or objects in the vehicle.

According to one embodiment, the minimum required vehicle door space is larger with a sensed higher weight compared to the minimum required door space with a sensed lower weight.

According to one embodiment, the minimum required vehicle door space is pre-set.

According to one embodiment, the door lock is activated if the sensed weight is lower than a predefined weight threshold.

According to one embodiment, the method further comprises:
- activating an alert or graphically representing the vehicle doors for which the vehicle door activating device will be activated at a parking position, prior to reaching the parking position.

According to the invention, the method further comprises:
- sensing the position of the trunk door during a previous stand still,
- transmitting trunk door position data during the previous stand still to the park assist system for determining optimal parking route and parking position data.

According to the invention, a vehicle exit assist system according to claim 11 is provided,

According to one embodiment, the system is arranged to:
- sense the presence of driver/passengers and objects in the vehicle by a seat sensor and/or trunk sensor respectively,
- determining driver/passenger and object location data in the vehicle, by a determination unit,
- transmit driver/passenger and object location data to a park assist system for determining optimal parking route and parking position data by a vehicle communication unit,
- receive the optimal parking position data from the park assist system by a vehicle communication unit,
- request available vehicle door space data for each vehicle door having an associated driver/passenger or object based on the parking position data by a controller,
- receive available vehicle door space data for each vehicle door having an associated driver/passenger or object based on the parking position data, by a vehicle communication unit,
- determine a minimum required vehicle door space for each vehicle door having an associated driver/passenger or object, by the determination unit,
- activate a vehicle door counter force device for creating a force against opening the vehicle door if the available vehicle door space is less than a minimum required vehicle door space for each vehicle door having an associated passenger or object.

According to one embodiment, the vehicle door counter force device is a door lock for locking the vehicle door, such as a child lock, whereby opening of the vehicle door is prevented.

According to the invention, the vehicle doors comprise the vehicle rear door, wherein the vehicle exit assist system is further arranged to:
- sense the position of the trunk door during a previous stand still by a trunk door sensor
- transmitting trunk door position data during the previous stand still to the park assist system for determining optimal parking route and parking position data by a vehicle communication unit.

According to the invention a computer program is provided, comprising computer readable code means, which when run in a connected vehicle exit assist system arranged to optimize the exit from the vehicle during parking causes the connected vehicle exit assist system arranged to optimize the exit from the vehicle during parking to perform the method according to any of the above embodiments, for example as described in [0008]-[0017].

According to another embodiment, a computer program product is provided, comprising a computer readable medium and a computer program according to the above embodiment, for example as described in [0022], wherein the computer program is stored on the computer readable medium.

According to the invention, a vehicle or vessel is provided comprising a vehicle exit assist system according to claim 11, and claims dependent thereon.

### Brief description of drawings

The invention is now described, by way of example, with reference to the accompanying drawings, in which:
Fig. 1 shows a perspective view of a vehicle comprising a vehicle exit assist system according to the invention.
Fig. 2a is a flow chart illustrating a procedure in a vehicle exit assist system.
Fig. 2b-2d shows flow charts illustrating a procedure in a vehicle exit assist system.
Fig. 3a is a model of a vehicle with vehicle doors opened for exit in a parking position.
Fig 3b is a model of a vehicle with vehicle doors opened for exit in a parking position.
Fig. 4 is a model of a vehicle rear door opened for exit in a parking position.
Fig. 5 illustrates example embodiments of a vehicle exit assist system.
Fig. 6 shows an illustration of embodiments of a vehicle exit assist system.

### Description of embodiments

In the following, a detailed description of the invention will be given. In the drawing figures, like reference numerals designate identical or corresponding elements throughout the several figures. It will be appreciated that these figures are for illustration only and are not in any way restricting the scope of the invention.

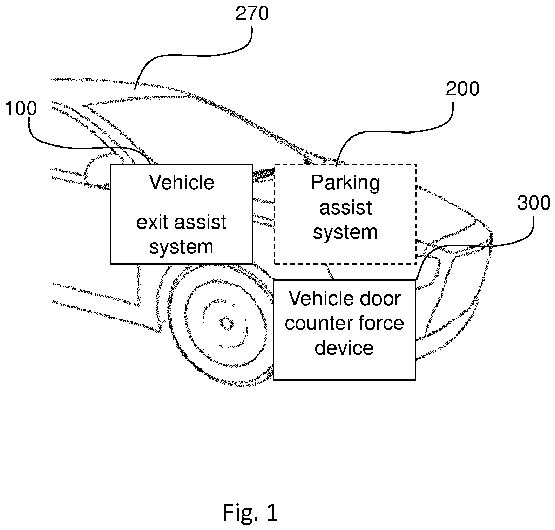

Fig.1 shows a perspective view of a vehicle 270 comprising a vehicle exit assist system 100 for optimizing the exit of at least one driver/passenger and/or at least one object from the vehicle during parking. The vehicle exit assist system 100 may comprise one of e.g. the following: a IHU (Infotainment Head Unit), a TEM (Telematics Module), a CEM (Central Electronic Module) or an ECU (Electronic Control Module). The vehicle 270 further comprises a parking assist system 200 for assisting navigation of the vehicle 270 during parking, such as semi- or full automatic parking navigation, wherein the parking assist system 200 may comprise one of e.g. the following: a CEM, ECU, IHU (Integrated Head Unit), DIM (Driver Information Module), a PSCM (Power Steering Control Module). The vehicle 270 further comprises a vehicle door counter force device 300. What is referred to as system throughout this patent application may also be known as a node. What is referred to as a passenger of the vehicle may also comprise the driver. What is referred to as "exit" may relate to the exit of persons such as driver and passengers, however also exit of objects in the sense of taking objects out of the vehicle 270.

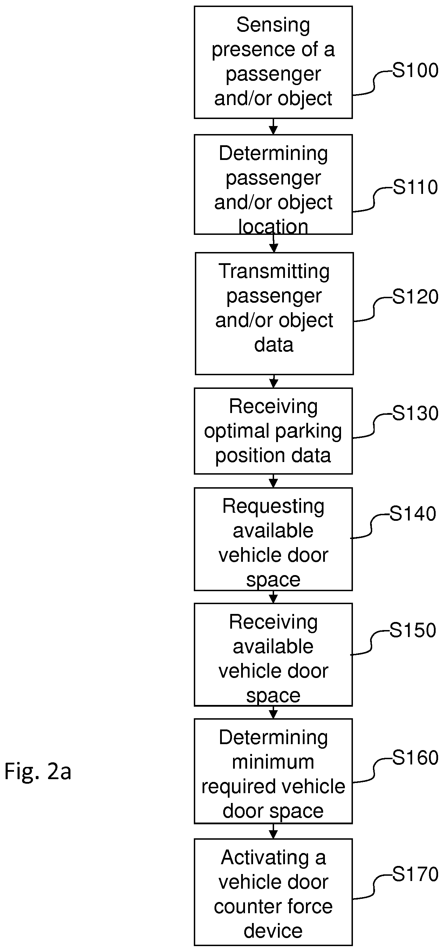

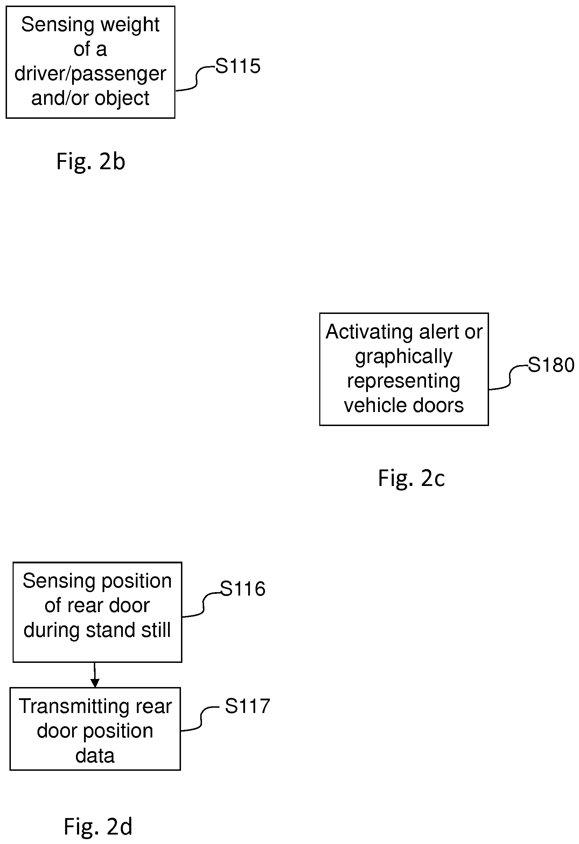

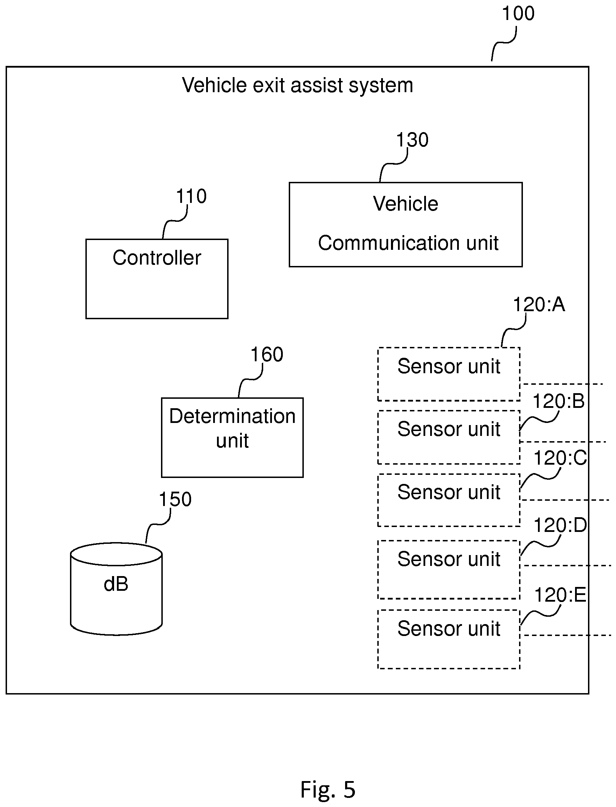

A procedure or method in a vehicle exit assist system 100 for optimizing the exit of at least one driver/passenger and/or at least one object from a vehicle 270 during parking will now be described with reference to Fig. 2. In a first step S100, sensing the presence of driver/passenger and/or objects in the vehicle 270 is carried out. According to one embodiment, the sensing is carried out by one or a plurality of sensor units 120:A-120:E, as can be seen in Fig. 5. These sensor units 120:A-120:E may be arranged in or in connection with the seats and trunk of the vehicle 270 respectively. According to one embodiment, the sensors 120:A-120:E comprises at least one of a seat sensor, seat belt sensor, trunk sensor configured for sensing the presence and potentially the weight of driver/passengers and objects. According to one embodiment, the sensors 120A-120:E are pressure sensors. According to one embodiment, sensing the presence has the same meaning as sensing a presence or sensing for a presence, i.e. to determine whether a specific seat or trunk is occupied by a driver/passenger or object respectively. According to one embodiment, such determination may be carried out using a determination unit based on the signals from the sensors 120:A-120E. The system may be initiated by a recognition of the system 100 that parking activity is initiated, e.g. by sensing certain parking activity related actions carried out by the driver of the vehicle 270, whereby parking activity input is received. Such actions may be stopping the vehicle and/or reversing the vehicle at low speed. According to one embodiment, such actions may further comprises at least one, but alternatively a combination of, stopping the vehicle and/or reversing the vehicle at low speed, driving below a specific speed threshold, scanning for parking spots, approaching a predefined geographical target as set in a GPS device of the vehicle or connected to the vehicle, using flashing indicator. In one embodiment, parking activity input comprises notification that semi- or full automatic parking assist system has been initiated. According to one embodiment, any action that would automatically initiate the semi- or full automatic parking assist system comprises parking activities. In a next step, S110, the vehicle exit assist system 100 determines passenger and/or object location data in the vehicle 270 based on sensed presence in the forgoing step, i.e. if a driver/passenger and/or object is sensed, the system 100 determines the location of the driver/passenger and/or objects. According to one embodiment, the location is the passenger seats. According to one embodiment, the location comprises the trunk. In a further step S120, the determined passenger and/or object location data is transmitted to a park assist system 200 for determining optimal parking route and parking position data in a parking spot. The determination of an optimal parking route and position based on the information concerning the position of the passengers is carried out by known means in known parking- or driving assist systems. As described in prior art document EP2746137 A1 by the applicant, a driving assist system is disclosed, which enables the autonomous parking of a vehicle in a parking place and that uses information about the surroundings such as e.g. other parked vehicles, moving vehicles, dynamic or stationary objects, animals, other barriers or guiding means in a parking area to perform this task. In order to determine information about the surroundings one or more sensors may be utilized, such as a radar, a lidar, an IR camera and/or ultrasonic sensor among others. It is known in the art to provide automatic parking control systems wherein the most optimal position of the vehicle 270 in such parking spot takes into consideration the available vehicle door space for each door having an associated passenger, wherein the doors are openable for allowing an exit and calculates the position of the vehicle 270 thereafter.

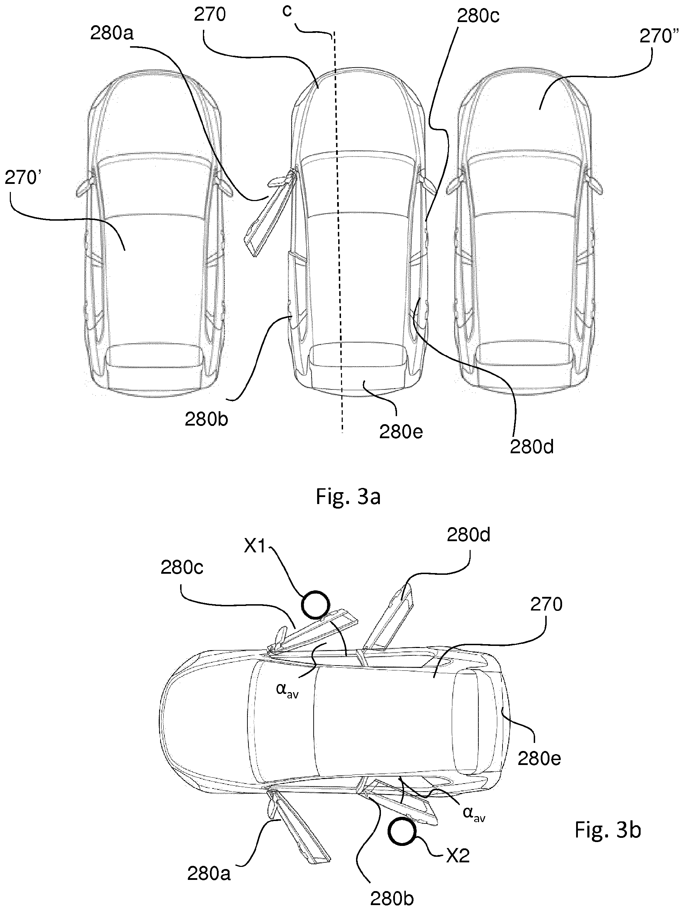

In a further step S130 the vehicle exit assist node 100 receives the optimal parking position data from the parking assist node 200. In a next step S140, the vehicle exit assist system 100 requests available vehicle door space αₐᵥ for each door having an associated passenger and/or object. The request may be sent to the parking assist node 200 or within the vehicle exit assist node 100. According to one embodiment, the available door space αₐᵥ is defined as a share of maximum door space, e.g. expressed as an angle αₐᵥ, wherein a maximum opened vehicle door is 100%, i.e. not restricted by any external obstacles, is defined as αₘₐₓ. In a further step S150, the vehicle exit assist node 100 receives available vehicle door space αₐᵥ for each door having an associated passenger and/or object from e.g. the vehicle exit assist node 100 or the parking assist node 200. In a next step, S160, the vehicle exit assist node 100 determines a minimum required vehicle door space α_{req} for each door having an associated passenger and/or object. This minimum required door space may be preset as being α_{req}= αₘₐₓ According to one embodiment, αₐᵥ may be any share of αₘₐₓ, and depend on various parameters such as e.g. weight of the associated driver/passenger and/or object as described below. In a further step S170, the vehicle exit assist node 100 activates a vehicle door counter force device 300 for creating a force against opening the vehicle door if the available vehicle door space αₐᵥ is less than a minimum required vehicle door space α_{req} i.e. if αₐᵥ<α_{req}, for each vehicle door 280a, 280b, 280c, 280d, 280e, as shown in e.g. Fig. 3a, 3b, having an associated driver/passenger or object. According to one embodiment, the vehicle door counter force device 300 is a door lock for locking the door 280a, 280b, 280c, 280d, 280e, such as a child lock whereby opening of the vehicle door 280a, 280b, 280c, 280d, 280e is prevented. According to one embodiment, the vehicle door counter force device 300 is a friction generating device which generates a resistance force opposite the direction of opening the door. This resistance force may be overcome by a larger force, e.g. by a passenger within or outside the vehicle 270 applying such force in order to open the vehicle door 270 and acting in such direction. According to one embodiment, each vehicle door 280a, 280b, 280c, 280d, 280e, comprises a vehicle door counter force device 300. According to one embodiment, the vehicle door counter force device 300 comprises a plurality of vehicle counter force creation units for creating the counter force, wherein each vehicle door 280a, 280b, 280c, 280d, 280e is associated with a counter force creations unit.

According to one embodiment, in a further intermediate step S115 the vehicle exit assist node 100 senses the weight of the sensed driver/passenger and/or objects in the vehicle 270. According to one embodiment, this may be carried out by the same sensors 120:A-120:E as used in step S100. In a step S160, the vehicle exit assist node 100 determines the minimum required vehicle door space α_{req} based on the sensed weight of the passenger and/or object in the vehicle 270. According to one embodiment, the minimum required vehicle door space α_{req} is larger with a sensed higher weight compared to the minimum required door space with a sensed lower weight. Hereby, implicitly, the expected size of the passenger and/or object is taken into consideration for allowing exit from the vehicle 270, via the vehicle door 280a, 280b, 280c, 280d, 280e. According to one embodiment, the door lock is activated if the sensed weight is lower than a predefined weight threshold. This threshold may be set to reflect the weight of a child at a certain age. Hereby, the system 100 prevents the opening of the door by a child in a situation with a narrow available door space, i.e. with a very low αₐᵥ, and thus, the risk of damage to the vehicle 270 or other vehicles is reduced. According to one embodiment, the vehicle door counter force device 300 activates a lock function if αₐᵥ is less than a first preset share threshold of α_{req}. According to one embodiment, the vehicle door counter force device 300 generates a resistance force if αₐᵥ is above a second preset share threshold of α_{req}, for instance the same share threshold of α_{req} as in the previous example, but at the same time below α_{req}. According to one embodiment, the first share threshold of α_{req} is between 50% and 90% of α_{req}. According to one embodiment, the second threshold is between 90% and 100% of α_{req} According to one embodiment, the second threshold is between 50% and 100% of α_{req} In a further step, S180, the vehicle exit assist system 100 activates an alert or graphically represents the vehicle doors 280a, 280b, 280c, 280d, 280e for which the vehicle door activating device 300 will be activated at a parking position, prior to reaching the parking position. According to one embodiment, the graphical representation may be displayed in the CSD (Center Stack Display), the DIM (Driver Information Module) or HUD (Head Up Display). According to one embodiment, the alert is activated via an audial signal. According to one embodiment, the audial signal is associated to a specific vehicle door 280a, 280b, 280c, 280d, 280e. According to one embodiment, the audial signal is a voice communicating which door for which the vehicle door activating device 300 will be activated at a parking position. According to one embodiment the audial signal is located at or in the vicinity of the door for which the vehicle door activating device 300 will be activated at a parking position. The alert or graphical representation will enable the relevant passengers described above to exit the vehicle 270 before driving into the parking position and thereby facilitate the exit from the vehicle for these persons. The same applies to objects which may advantageously be removed, i.e. exit the vehicle 270 before the vehicle is in the parking position.

According to one embodiment, the vehicle doors 280a, 280b, 280c, 280d, 280e comprise the vehicle rear door 280e, i.e. the trunk door. In an intermediate step S116, the vehicle exit assist system 100 senses the position of the rear door 280e during stand still. According to one embodiment, sensing the position comprises sensing if the vehicle rear door 280e is opened. Hereby, the system 100 takes into consideration if it is likely that the rear door 280e is to be opened again in the forthcoming parking position of the vehicle 270. In a next step S117, the vehicle exit assist system 100 transmits rear door position data during the previous stand still to the park assist system 200 for determining optimal parking route and parking position data. Thus, the parking assist system 200 bases the determination of an optimal parking route and parking position on the likelihood that the rear door 280e will be opened. By not solely taking the identification of objects in the trunk as a requirement for determining the parking route/parking position the number of available parking positions increases which facilitates parking and reduces time required for identifying a parking spot.

Fig. 3a discloses a parking situation of a vehicle 270 comprising the vehicle exit assist system 100. The vehicle 270 is to be parked between two vehicles 270' and 270". The vehicle exit assist system 100 recognizes the initiation of parking activities. The vehicle exit assist system 100 senses that a driver is present in the vehicle 270, and that the driver is the only person present in the vehicle 270. No objects are sensed in the trunk space. The sensed position is the driver seat, e.g. front left seat in Fig. 3. The parking assist system 200 uses this information to facilitate the exit of the driver, by determining the position of the vehicle offset from the center line c as shown in Fig. 3. Thereby, the vehicle door 280a associated with the driver is easily openable to a large extent which facilitates the driver's exit from the vehicle 270.

Fig. 3b discloses another parking situation of a vehicle 270 comprising the vehicle exit assist system 100. The vehicle 270 is to be parked between two obstacles X1 and X2. The vehicle exit assist system 100 recognizes the initiation of parking activities. The vehicle exit assist system 100 senses that four persons are present in the vehicle 270, i.e. a driver and three passengers, whereby the doors 280a, 280b, 280c, 280d needs to be used for enabling the exit from the vehicle 270. No objects are sensed in the trunk. The vehicle exit assist system 100 requests and receives αₐᵥ for each vehicle door 280a, 280b, 280c, 280d and determines α_{req} for each vehicle door 280a, 280b, 280c, 280d. Both vehicle doors 280a and 280d has an αₐᵥ=αₘₐₓ, so exit from these doors are not an issue. Vehicle door 280c is positioned so that obstacle X1 is present in a lateral direction. The available door space is α_{Av}=0,75α_{Max}. The system 100 uses a default setting wherein α_{Req}=α_{Max}. Thus, the system recognizes that α_{av<}α_{req} and a vehicle door counter force device 300 is activated whereby a force is created against opening of the door 280c. Thus, the front seat passenger senses that the door 280c is slightly stiff to open and is thereby also made aware that an obstacle is present outside the vehicle door 280c. The passenger thereby observes caution when opening the door so that damage to the door is prevented. The counter force device may be configured so that damage to the door is prevented even if the passenger would not be cautious when opening the door by applying a sufficient counter force. A similar situation for vehicle door 280b is shown in Fig. 3b as for door 280c, wherein αₐᵥ is lesser than in the case of door 280c. The system 100 has sensed the weight of the passenger associated to door 280b and the system 1 determines α_{req} based on this parameter for this particular vehicle seat which results in a lower α_{req} than αₘₐₓ. Still, α_{av<}α_{req} and a vehicle door counter force device 300 is activated whereby a force is created against opening of the door 280b.

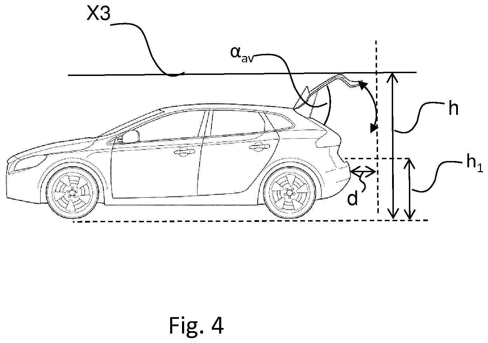

Fig. 4 discloses another parking situation of a vehicle 270 comprising the vehicle exit assist system 100. Fig. 4 shows a side view of a vehicle 270 wherein the rear door 280e is opened. An obstacle X3, in the form of a low garage roof is present in the parking situation shown. The obstacle may also be in the form of e.g. other vehicles or lorries parked rear of the vehicle 270, located close enough, i.e. within a distance d and having sufficient height h₁ to be in the movement path of the rear door 280e during opening/closing. The vehicle exit assist system 100 recognizes the initiation of parking activities. The vehicle exit assist system 100 senses that objects are present in the trunk space. Since the system further sensed the position of the rear door 280e during the previous stand still and sensed that the rear door 280e was opened, the park assist system determined the optimal parking route and parking position data based hereon. Hereby, the system 100 enables the opening of the rear door 280e in situations when it is likely that the rear door 280e should be opened but does limited the number of available parking spots in situations when it is unlikely that the rear door 280e is to be opened even in cases when objects are placed in the trunk. The vehicle exit assist system 100 requests and receives αₐᵥ for the vehicle door 280e and determines α_{req} for this vehicle door. Since αₐᵥ<α_{req} a vehicle door counter force device 300 is activated whereby a force is created against opening of the door 280e. Thus, the person opening the vehicle rear door 280e senses that the door 280e is slightly stiff to open and is thereby also made aware that an obstacle X3 is present outside the vehicle door 280e. The person thereby observes caution when opening the rear door so that damage to the door is prevented. The counter force device 300 may be configured so that damage to the door is prevented even if the person would not be cautious when opening the door by applying a sufficient counter force.

Fig. 5 discloses a vehicle exit assist system 100 for optimizing the exit of at least one driver/passenger and/or at least one object from the vehicle 270 during parking. The system 100 is arranged to sense the presence of driver/passengers and/or objects in the vehicle 270 by a seat sensor unit 120:A-120:D, and/or trunk sensor unit 120:E respectively. A determination unit 160 is further arranged to determine driver/passenger and/or object location data in the vehicle 270. A vehicle communication unit 130 is arranged to transmit driver/passenger and/or object location data to a park assist system 200 for determining optimal parking route and parking position data. The vehicle communication unit 130 is further arranged to receive the optimal parking position data from the park assist system 200. A controller 110 is thereafter arranged to request available vehicle door space αₐᵥ data for each vehicle door 280a, 280b, 280c, 280d, 280e, having an associated driver/passenger or object based on the parking position data. The vehicle communication unit 130 is arranged to receive available vehicle door space α_{Av} data for each vehicle door 280a, 280b, 280c, 280d, 280e having an associated driver/passenger or object based on the parking position data. The determination unit 130 is further arranged to determine a minimum required vehicle door space α_{req} for each vehicle door 280a, 280b, 280c, 280d, 280e having an associated driver/passenger object. The controller 110 is arranged to activate a vehicle door counter force device 300 for creating a force against opening the vehicle door 280a, 280b, 280c, 280d, 280e, if the available vehicle door space α_{Av} is less than a minimum required vehicle door space α_{req} for each vehicle door 280a, 280b, 280c, 280d, 280e having an associated driver/passenger or object.

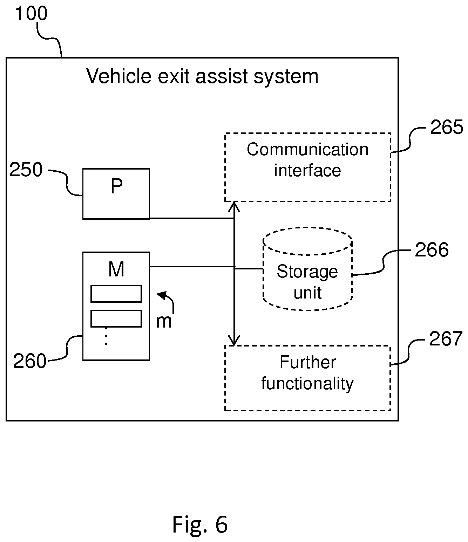

Fig. 6 shows an illustration of embodiments of a vehicle exit assist system 100. The vehicle exit assist system 100 may be implemented, by means of program modules of a respective computer program comprising code means which, when run by a processing unit 250 causes the vehicle exit assist system 100 to perform the above-described actions. The processing unit 250 may comprise a single Central Processing Unit (CPU), or could comprise two or more processing units. For example, the processing unit 250 may include general purpose microprocessors, instruction set processors and/or related chips sets and/or special purpose microprocessors such as Application Specific Integrated Circuits (ASICs). The processing unit 250 may also comprise a storage for caching purposes.

Each computer program may be carried by a computer program product 260 in the vehicle exit assist system 100, shown in Fig. 1, 4, 6, et al, in the form of a memory having a computer readable medium and being connected to the processing unit 250. The computer program product 260 or memory thus comprises a computer readable medium on which the computer program is stored e.g. in the form of computer program modules "m". For example, the memory 260 may be a flash memory, a Random-Access Memory (RAM), a Read-Only Memory (ROM) or an Electrically Erasable Programmable ROM (EEPROM), and the program modules m could in alternative embodiments be distributed on different computer program products in the form of memories within the vehicle exit assist system 100.

The vehicle exit assist system 100 may further comprise a communication interface 265. The communication interface 265 may be arranged to communicate with for example the sensor unit 120, parking assist system 200, vehicle door counter force device 300. In an embodiment the communication interface 265 may comprise chip set adopted for communication via CAN bus (Controller Area Network) or communication adopted to ISO 11898. Other examples of standards which may be supported by the communication interface 265are: ZigBee, Bluetooth, RFID (Radio frequency identification), USB (Universal serial bus), or IEEE 802.11 (Institute of Electrical and Electronics Engineers), including but not limited to 802.11a/b/n or other similar forthcoming standards. The communication interface 265 may comprise an antenna. The communication interface 265 may be connectable to an external antenna. The vehicle exit assist system 100 may further comprise one or more storage units 266 and further functionality 267 useful for the vehicle exit assist system 100 to serve its purpose as vehicle exit assist system, such as power supply, internal communications bus, internal cooling, database engine, operating system, not limiting to other functional ities.

A preferred embodiment of vehicle exit assist system according to the invention has been described. However, the person skilled in the art realizes that this can be varied within the scope of the appended claims.

## Claims

1. Method performed by a vehicle exit assist system (100) for optimizing the exit of at least one object from the vehicle (270) during parking, the vehicle comprising a trunk door, the method comprising:
- sensing the presence of the at least one object in the vehicle (270),
- determining object location data in the vehicle (270) based on sensed presence,
- transmitting object location data to a park assist system (200) for determining optimal parking route and parking position data,
- receiving the optimal parking position data from the park assist system,
- requesting available vehicle door space for the trunk door having an associated object based on the parking position data,
- receiving available vehicle door space for the trunk door having an associated object based on the parking position data,
- determining a minimum required vehicle door space for the trunk door having an associated object,
**characterized in that** the method further comprises:
- sensing the position of the trunk door during a previous stand still,
- transmitting trunk door position data during the previous stand still to the park assist system (300) for determining optimal parking route and parking position data.

2. The method according to claim 1, the method further comprising:
- activating a vehicle door counter force device (300) for creating a force against opening the trunk door if the available vehicle door space is less than a minimum required vehicle door space for the trunk door having an associated object.

3. The method according to claim 1 or 2 for also optimizing the exit of a driver/passenger from the vehicle (270) during parking, the method comprising:
- sensing the presence of driver/passengers and the at least one object in the vehicle (270),
- determining driver/passenger location data and the object location data in the vehicle (270) based on sensed presence,
- transmitting driver/passenger location data and the object location data to the park assist system (200) for determining optimal parking route and parking position data,
- receiving the optimal parking position data from the park assist system,
- requesting available vehicle door space for each vehicle door having an associated driver/passenger or object based on the parking position data, the vehicle doors comprising the trunk door,
- receiving available vehicle door space for each vehicle door having an associated driver/passenger or object based on the parking position data,
- determining a minimum required vehicle door space for each vehicle door having an associated driver/passenger or object,
- activating a vehicle door counter force device (300) for creating a force against opening the vehicle door if the available vehicle door space is less than a minimum required vehicle door space for each vehicle door having an associated driver/passenger or object.

4. The method according to claim 2 or 3, wherein the vehicle door counter force device (300) is a door lock for locking the door, such as a child lock whereby opening of the vehicle door is prevented.

5. The method according to claim 2 or 3, wherein the vehicle door counter force device (300) is a friction generating device which generates a resistance force opposite the direction of opening the door that may be overcome.

6. The method according to any of the previous claims, the method further comprising:
- sensing the weight of the sensed passenger and/or object in the vehicle,
- determining the minimum required vehicle door space based on the sensed weight of the passenger and/or object in the vehicle (270).

7. The method according to claim 6, wherein the minimum required vehicle door space is larger with a sensed higher weight compared to the minimum required door space with a sensed lower weight.

8. The method according to any of the previous claims 1-7, wherein the minimum required vehicle door space is pre-set.

9. The method according to any of the previous claims 6-8, wherein the door lock is activated if the sensed weight is lower than a predefined weight threshold.

10. The method according to any of claims 2-9, the method further comprising:
- activating an alert, or graphically representing the vehicle doors for which the vehicle door counter force device will be activated at a parking position, prior to reaching the parking position.

11. A vehicle exit assist system (100) for optimizing the exit of at least one object from the vehicle during parking, the vehicle comprising a trunk door, the system is arranged to:
- sense the presence of the at least one object in the vehicle (270) by a trunk sensor,
- determining object location data in the vehicle (270), by a determination unit (160),
- transmit object location data to a park assist system (200) for determining optimal parking route and parking position data by a vehicle communication unit 130,
- receive the optimal parking position data from the park assist system (200) by a vehicle communication unit (130),
- request available vehicle door space data for a trunk door having an associated object based on the parking position data by a controller (110),
- receive available vehicle door space data for the trunk door having an associated object based on the parking position data, by a vehicle communication unit (130),
- determine a minimum required vehicle door space for the trunk door having an associated object, by the determination unit (160),
**characterized in that** the system further is arranged to:
- sense the position of the trunk door during a previous stand still by a trunk door sensor,
- transmitting trunk door position data during the previous stand still to the park assist system (200) for determining optimal parking route and parking position data, by a vehicle communication unit (130).

12. The vehicle exit assist system (100) according to claim 11, the system further being arranged to:
- activate a vehicle door counter force device (300) for creating a force against opening the trunk door if the available vehicle door space is less than a minimum required vehicle door space for the trunk door having an associated object.

13. The vehicle exit assist system (100) according to claim 11 or 12 also for optimizing the exit of a driver/passenger from the vehicle during parking, the system is arranged to:
- sense the presence of driver/passengers and the at least one object in the vehicle (270) by a seat sensor and the trunk sensor, respectively,
- determining driver/passenger location data and the object location data in the vehicle (270), by the determination unit (160),
- transmit the driver/passenger location data and the object location data to the park assist system (200) for determining optimal parking route and parking position data by a vehicle communication unit 130,
- receive the optimal parking position data from the park assist system (200) by the vehicle communication unit (130),
- request available vehicle door space data for each vehicle door having an associated driver/passenger or object based on the parking position data by the controller (110), the vehicle doors comprising the trunk door,
- receive available vehicle door space data for each vehicle door having an associated driver/passenger or object based on the parking position data, by the vehicle communication unit (130),
- determine a minimum required vehicle door space for each vehicle door having an associated driver/passenger or object, by the determination unit (160),
- activate a vehicle door counter force device (300) for creating a force against opening the vehicle door if the available vehicle door space is less than a minimum required vehicle door space for each vehicle door having an associated passenger or object.

14. The vehicle exit assist system (100) according to claim 12 or 13, wherein the vehicle door counter force device (300) is a door lock for locking the vehicle door, such as a child lock, whereby opening of the vehicle door is prevented.

15. A computer program, comprising computer readable code means, which when run in a connected vehicle exit assist system (100) arranged for optimizing the exit of at least one object from the vehicle (270) during parking, causes the vehicle exit assist system (100) to perform the method according to any of the claims 1-10.

16. A computer program product, comprising a computer readable medium and a computer program according to claim 15, wherein the computer program is stored on the computer readable medium.

17. Vehicle (270) comprising a vehicle exit assist system (100) according to any of the previous claims 12-14.

## Patentansprüche

1. Verfahren, durchgeführt von einem Fahrzeugausstiegsunterstützungssystem (100) zum Optimieren des Ausstiegs mindestens eines Objekts aus dem Fahrzeug (270) beim Parken, wobei das Fahrzeug eine Kofferraumtür umfasst, das Verfahren umfassend:
- Erfassen des Vorhandenseins des mindestens eines Objekts in dem Fahrzeug (270),
- Bestimmen von Objektortsdaten in dem Fahrzeug (270) basierend auf dem erfassten Vorhandensein,
- Übertragen von Objektortsdaten an ein Parkassistentsystem (200) zum Bestimmen von optimalen Parkrouten- und Parkpositionsdaten,
- Empfangen der optimalen Parkpositionsdaten von dem Parkassistentsystem,
- Anfordern des verfügbaren Fahrzeugtürraums für die Kofferraumtür mit einem assoziierten Objekt basierend auf den Parkpositionsdaten,
- Empfangen des verfügbaren Fahrzeugtürraums für die Kofferraumtür mit einem assoziierten Objekt basierend auf den Parkpositionsdaten,
- Bestimmen eines minimal erforderlichen Fahrzeugtürraums für die Kofferraumtür mit einem assoziierten Objekt,
**dadurch gekennzeichnet, dass** das Verfahren ferner umfasst:
- Erfassen der Position der Kofferraumtür während eines vorherigen Stillstands,
- Übertragen von Kofferraumtürpositionsdaten während des vorherigen Stillstands an das Parkassistentsystem (300) zum Bestimmen optimaler Parkrouten- und Parkpositionsdaten.

2. Verfahren nach Anspruch 1, das Verfahren ferner umfassend:
- Aktivieren einer Fahrzeugtür-Gegenkraftvorrichtung (300) zum Erzeugen einer Kraft gegen Öffnen der Kofferraumtür, wenn der verfügbare Fahrzeugtürraum geringer ist als ein minimal erforderlicher Fahrzeugtürraum, für die Kofferraumtür mit einem assoziierten Objekt.

3. Verfahren nach Anspruch 1 oder 2 zum ebenfalls Optimieren des Ausstiegs eines Fahrers/Mitfahrers aus dem Fahrzeug (270) beim Parken, das Verfahren umfassend:
- Erfassen des Vorhandenseins von Fahrer/Mitfahrern und des mindestens einen Objekts in dem Fahrzeug (270),
- Bestimmen von Fahrer-/Mitfahrerortsdaten und der Objektortsdaten in dem Fahrzeug (270) basierend auf dem erfassten Vorhandensein,
- Übertragen von Fahrer-/Mitfahrerortsdaten und der Objektortsdaten an das Parkassistentsystem (200) zum Bestimmen von optimalen Parkrouten- und Parkpositionsdaten,
- Empfangen der optimalen Parkpositionsdaten von dem Parkassistentsystem,
- Anfordern des verfügbaren Fahrzeugtürraums für jede Fahrzeugtür mit einem assoziierten Fahrer/Mitfahrer oder Objekt basierend auf den Parkpositionsdaten, wobei die Fahrzeugtüren die Kofferraumtür umfassen,
- Empfangen des verfügbaren Fahrzeugtürraums für jede Fahrzeugtür mit einem assoziierten Fahrer/Mitfahrer oder Objekt basierend auf den Parkpositionsdaten,
- Bestimmen eines minimal erforderlichen Fahrzeugtürraums für jede Fahrzeugtür mit einem assoziierten Fahrer/Mitfahrer oder Objekt,
- Aktivieren einer Fahrzeugtür-Gegenkraftvorrichtung (300) zum Erzeugen einer Kraft gegen Öffnen der Fahrzeugtür, wenn der verfügbare Fahrzeugtürraum geringer ist als ein minimal erforderlicher Fahrzeugtürraum, für jede Fahrzeugtür mit einem assoziierten Fahrer/Mitfahrer oder Objekt.

4. Verfahren nach Anspruch 2 oder 3, wobei die Fahrzeugtür-Gegenkraftvorrichtung (300) eine Türverriegelung zum Verriegeln der Tür wie eine Kinderverriegelung ist, wodurch Öffnen der Fahrzeugtür verhindert wird.

5. Verfahren nach Anspruch 2 oder 3, wobei die Fahrzeugtür-Gegenkraftvorrichtung (300) eine Reibungserzeugungsvorrichtung ist, die eine Widerstandskraft entgegen der Öffnungsrichtung der Tür erzeugt, die überwunden werden kann.

6. Verfahren nach einem der vorstehenden Ansprüche, das Verfahren ferner umfassend:
- Erfassen des Gewichts des erfassten Mitfahrers und/oder Objekts in dem Fahrzeug,
- Bestimmen des minimal erforderlichen Fahrzeugtürraums basierend auf dem erfassten Gewicht des Mitfahrers und/oder Objekts in dem Fahrzeug (270).

7. Verfahren nach Anspruch 6, wobei der minimal erforderliche Fahrzeugtürraum mit einem erfassten höheren Gewicht größer ist im Vergleich mit dem minimal erforderlichen Türraum mit einem erfassten niedrigeren Gewicht.

8. Verfahren nach einem der vorstehenden Ansprüche 1-7, wobei der minimal erforderliche Fahrzeugtürraum im Voraus eingestellt ist.

9. Verfahren nach einem der vorstehenden Ansprüche 6-8, wobei die Türverriegelung aktiviert wird, wenn das erfasste Gewicht niedriger ist als ein im Voraus definierter Gewichtsschwellenwert.

10. Verfahren nach einem der Ansprüche 2-9, das Verfahren ferner umfassend:
- Aktivieren einer Warnung oder grafisches Repräsentieren der Fahrzeugtüren, für die die Fahrzeugtür-Gegenkraftvorrichtung an einer Parkposition aktiviert wird, vor dem Erreichen der Parkposition.

11. Fahrzeugausstiegsunterstützungssystem (100) zum Optimieren des Ausstiegs mindestens eines Objekts aus dem Fahrzeug beim Parken, wobei das Fahrzeug eine Kofferraumtür umfasst, das System angeordnet zum:
- Erfassen des Vorhandenseins des mindestens eines Objekts in dem Fahrzeug (270) durch einen Kofferraumsensor,
- Bestimmen von Objektortsdaten in dem Fahrzeug (270) durch eine Bestimmungseinheit (160),
- Übertragen von Objektortsdaten an ein Parkassistentsystem (200) zum Bestimmen von optimalen Parkrouten- und Parkpositionsdaten durch eine Fahrzeugkommunikationseinheit (130),
- Empfangen der optimalen Parkpositionsdaten von dem Parkassistentsystem (200) durch eine Fahrzeugkommunikationseinheit (130),
- Anfordern von Daten über den verfügbaren Fahrzeugtürraum für eine Kofferraumtür mit einem assoziierten Objekt basierend auf den Parkpositionsdaten durch eine Steuerung (110),
- Empfangen von Daten über den verfügbaren Fahrzeugtürraum für die Kofferraumtür mit einem assoziierten Objekt basierend auf den Parkpositionsdaten durch eine Fahrzeugkommunikationseinheit (130),
- Bestimmen eines minimal erforderlichen Fahrzeugtürraums für die Kofferraumtür mit einem assoziierten Objekt durch die Bestimmungseinheit (160),
**dadurch gekennzeichnet, dass** das System ferner angeordnet ist zum:
- Erfassen der Position der Kofferraumtür während eines vorherigen Stillstands durch einen Kofferraumtürsensor,
- Übertragen von Kofferraumtürpositionsdaten während des vorherigen Stillstands an das Parkassistentsystem (200) zum Bestimmen optimaler Parkrouten- und Parkpositionsdaten durch eine Fahrzeugkommunikationseinheit (130).

12. Fahrzeugausstiegsunterstützungssystem (100) nach Anspruch 11, das System ferner angeordnet zum:
- Aktivieren einer Fahrzeugtür-Gegenkraftvorrichtung (300) zum Erzeugen einer Kraft gegen Öffnen der Kofferraumtür, wenn der verfügbare Fahrzeugtürraum geringer ist als ein minimal erforderlicher Fahrzeugtürraum, für die Kofferraumtür mit einem assoziierten Objekt.

13. Fahrzeugausstiegsunterstützungssystem (100) nach Anspruch 11 oder 12, ebenfalls zum Optimieren des Ausstiegs eines Fahrers/Mitfahrers aus dem Fahrzeug beim Parken, das System angeordnet zum:
- Erfassen des Vorhandenseins von Fahrer/Mitfahrern und des mindestens einen Objekts in dem Fahrzeug (270) durch einen Sitzsensor bzw. dem Kofferraumsensor,
- Bestimmen von Fahrer-/Mitfahrerortsdaten und der Objektortsdaten in dem Fahrzeug (270) durch die Bestimmungseinheit (160),
- Übertragen der Fahrer-/Mitfahrerortsdaten und der Objektortsdaten an das Parkassistentsystem (200) zum Bestimmen von optimalen Parkrouten- und Parkpositionsdaten durch eine Fahrzeugkommunikationseinheit (130),
- Empfangen der optimalen Parkpositionsdaten von dem Parkassistentsystem (200) durch die Fahrzeugkommunikationseinheit (130),
- Anfordern von Daten über den verfügbaren Fahrzeugtürraum für jede Fahrzeugtür mit einem assoziierten Fahrer/Mitfahrer oder Objekt basierend auf den Parkpositionsdaten durch die Steuerung (110), wobei die Fahrzeugtüren die Kofferraumtür umfassen,
- Empfangen von Daten über den verfügbaren Fahrzeugtürraum für jede Fahrzeugtür mit einem assoziierten Fahrer/Mitfahrer oder Objekt basierend auf den Parkpositionsdaten durch die Fahrzeugkommunikationseinheit (130),
- Bestimmen eines minimal erforderlichen Fahrzeugtürraums für jede Fahrzeugtür mit einem assoziierten Fahrer/Mitfahrer oder Objekt durch die Bestimmungseinheit (160),
- Aktivieren einer Fahrzeugtür-Gegenkraftvorrichtung (300) zum Erzeugen einer Kraft gegen Öffnen der Fahrzeugtür, wenn der verfügbare Fahrzeugtürraum geringer ist als ein minimal erforderlicher Fahrzeugtürraum, für jede Fahrzeugtür mit einem assoziierten Mitfahrer oder Objekt.

14. Fahrzeugausstiegsunterstützungssystem (100) nach Anspruch 12 oder 13, wobei die Fahrzeugtür-Gegenkraftvorrichtung (300) eine Türverriegelung zum Verriegeln der Fahrzeugtür wie eine Kinderverriegelung ist, wodurch Öffnen der Fahrzeugtür verhindert wird.

15. Computerprogramm, umfassend computerlesbare Codemittel, die, wenn sie in einem angeschlossenen Fahrzeugausstiegsunterstützungssystem (100), angeordnet zum Optimieren des Ausstiegs des mindestens einen Objekts aus dem Fahrzeug (270) beim Parken, ausgeführt werden, bewirken, dass das Fahrzeugausstiegsunterstützungssystem (100) das Verfahren nach einem der Ansprüche 1-10 durchführt.

16. Computerprogrammprodukt, umfassend ein computerlesbares Medium und ein Computerprogramm nach Anspruch 15, wobei das Computerprogramm auf dem computerlesbaren Medium gespeichert ist.

17. Fahrzeug (270), umfassend ein Fahrzeugausstiegsunterstützungssystem (100) nach einem der vorstehenden Ansprüche 12-14.

## Revendications

1. Procédé effectué par un système d'assistance de sortie de véhicule (100) pour optimiser la sortie d'au moins un objet du véhicule (270) pendant le stationnement, le véhicule comprenant une porte de coffre, le procédé comprenant les étapes consistant à :
- détecter la présence dudit au moins un objet dans le véhicule (270),
- déterminer des données d'emplacement d'objet dans le véhicule (270) sur la base de la présence détectée,
- transmettre des données d'emplacement d'objet à un système d'aide au stationnement (200) pour déterminer une trajectoire de stationnement optimale et des données de position de stationnement,
- recevoir les données de position de stationnement optimale du système d'aide au stationnement,
- demander l'espace de portière de véhicule disponible pour la porte de coffre ayant un objet associé sur la base des données de position de stationnement,
- recevoir l'espace de portière de véhicule disponible pour la porte de coffre ayant un objet associé sur la base des données de position de stationnement,
- déterminer un espace de portière de véhicule minimum nécessaire pour la porte de coffre ayant un objet associé,
**caractérisé en ce que** le procédé comprend en outre les étapes consistant à :
- détecter la position de la porte de coffre pendant une immobilisation précédente,
- transmettre des données de position de porte de coffre pendant l'immobilisation précédente au système d'aide au stationnement (300) pour déterminer une trajectoire de stationnement optimale et des données de position de stationnement.

2. Procédé selon la revendication 1, le procédé comprenant en outre :
- l'activation d'un dispositif de force antagoniste de portière de véhicule (300) pour créer une force contre l'ouverture de la porte de coffre si l'espace de portière de véhicule disponible est inférieur à un espace de portière de véhicule minimum nécessaire pour la porte de coffre ayant un objet associé.

3. Procédé selon la revendication 1 ou 2 pour optimiser aussi la sortie d'un conducteur/passager du véhicule (270) pendant le stationnement, le procédé comprenant les étapes consistant à :
- détecter la présence d'un conducteur/de passagers et dudit au moins un objet dans le véhicule (270),
- déterminer des données d'emplacement de conducteur/passager et les données d'emplacement d'objet dans le véhicule (270) sur la base de la présence détectée,
- transmettre des données d'emplacement de conducteur/passager et les données d'emplacement d'objet au système d'aide au stationnement (200) pour déterminer une trajectoire de stationnement optimale et des données de position de stationnement,
- recevoir les données de position de stationnement optimale du système d'aide au stationnement,
- demander l'espace de portière de véhicule disponible pour chaque portière de véhicule ayant un conducteur/passager ou objet associé sur la base des données de position de stationnement, les portières de véhicule comprenant la porte de coffre,
- recevoir l'espace de portière de véhicule disponible pour chaque portière de véhicule ayant un conducteur/passager ou objet associé sur la base des données de position de stationnement,
- déterminer un espace de portière de véhicule minimum nécessaire pour chaque portière de véhicule ayant un conducteur/passager ou objet associé,
- activer un dispositif de force antagoniste de portière de véhicule (300) pour créer une force contre l'ouverture de la portière de véhicule si l'espace de portière de véhicule disponible est inférieur à un espace de portière de véhicule minimum nécessaire pour chaque portière de véhicule ayant un conducteur/passager ou objet associé.

4. Procédé selon la revendication 2 ou 3, dans lequel le dispositif de force antagoniste de portière de véhicule (300) est une serrure de portière pour verrouiller la portière, telle qu'un verrouillage enfant, qui empêche l'ouverture de la portière de véhicule.

5. Procédé selon la revendication 2 ou 3, dans lequel le dispositif de force antagoniste de portière de véhicule (300) est un dispositif générateur de friction qui génère une force de résistance opposée à la direction d'ouverture de la portière qui peut être surmontée.

6. Procédé selon l'une quelconque des revendications précédentes, le procédé comprenant en outre :
- la détection du poids du passager et/ou de l'objet détecté dans le véhicule,
- la détermination de l'espace de portière de véhicule minimum nécessaire sur la base du poids détecté du passager et/ou de l'objet dans le véhicule (270) .

7. Procédé selon la revendication 6, dans lequel l'espace de portière de véhicule minimum nécessaire est supérieur pour un poids supérieur détecté en comparaison avec l'espace de portière nécessaire au minimum pour un poids inférieur détecté.

8. Procédé selon l'une quelconque des revendications précédentes 1 à 7, dans lequel l'espace de portière de véhicule minimum nécessaire est préréglé.

9. Procédé selon l'une quelconque des revendications précédentes 6 à 8, dans lequel la serrure de portière est activée si le poids détecté est inférieur à un seuil de poids prédéfini.

10. Procédé selon l'une quelconque des revendications 2 à 9, le procédé comprenant en outre :
- l'activation d'une alerte, ou la représentation graphique des portières de véhicule pour lesquelles le dispositif de force antagoniste de portière de véhicule sera activé dans une position de stationnement, avant d'atteindre la position de stationnement.

11. Système d'assistance de sortie de véhicule (100) pour optimiser la sortie d'au moins un objet du véhicule pendant le stationnement, le véhicule comprenant une porte de coffre, le système étant agencé pour :
- détecter la présence dudit au moins un objet dans le véhicule (270) par un capteur de coffre,
- déterminer des données d'emplacement d'objet dans le véhicule (270), par une unité de détermination (160),
- transmettre des données d'emplacement d'objet à un système d'aide au stationnement (200) pour déterminer une trajectoire de stationnement optimale et des données de position de stationnement par une unité de communication de véhicule (130),
- recevoir les données de position de stationnement optimale du système d'aide au stationnement (200) par une unité de communication de véhicule (130),
- demander des données d'espace de portière de véhicule disponible pour une porte de coffre ayant un objet associé sur la base des données de position de stationnement par un contrôleur (110),
- recevoir des données d'espace de portière de véhicule disponible pour la porte de coffre ayant un objet associé sur la base des données de position de stationnement, par une unité de communication de véhicule (130),
- déterminer un espace de portière de véhicule minimum nécessaire pour la porte de coffre ayant un objet associé, par l'unité de détermination (160),
**caractérisé en ce que** le système est en outre agencé pour :
- détecter la position de la porte de coffre pendant une immobilisation précédente par un capteur de porte de coffre,
- transmettre des données de position de porte de coffre pendant l'immobilisation précédente au système d'aide au stationnement (200) pour déterminer une trajectoire de stationnement optimale et des données de position de stationnement, par une unité de communication de véhicule (130).

12. Système d'assistance de sortie de véhicule (100) selon la revendication 11, le système étant en outre agencé pour :
- activer un dispositif de force antagoniste de portière de véhicule (300) pour créer une force contre l'ouverture de la porte de coffre si l'espace de portière de véhicule disponible est inférieur à un espace de portière de véhicule minimum nécessaire pour la porte de coffre ayant un objet associé.

13. Système d'assistance de sortie de véhicule (100) selon la revendication 11 ou 12 pour optimiser également la sortie d'un conducteur/passager du véhicule pendant le stationnement, le système étant agencé pour :
- détecter la présence d'un conducteur/de passagers et dudit au moins un objet dans le véhicule (270) par un capteur de siège et le capteur de coffre, respectivement,
- déterminer des données d'emplacement de conducteur/passager et les données d'emplacement d'objet dans le véhicule (270), par l'unité de détermination (160),
- transmettre les données d'emplacement de conducteur/passager et les données d'emplacement d'objet au système d'aide au stationnement (200) pour déterminer une trajectoire de stationnement optimale et des données de position de stationnement par une unité de communication de véhicule (130),
- recevoir les données de position de stationnement optimale du système d'aide au stationnement (200) par l'unité de communication de véhicule (130),
- demander des données d'espace de portière de véhicule disponible pour chaque portière de véhicule ayant un conducteur/passager ou objet associé sur la base des données de position de stationnement par le contrôleur (110), les portières de véhicule comprenant la porte de coffre,
- recevoir les données d'espace de portière de véhicule disponible pour chaque portière de véhicule ayant un conducteur/passager ou objet associé sur la base des données de position de stationnement, par l'unité de communication de véhicule (130),
- déterminer un espace de portière de véhicule minimum nécessaire pour chaque portière de véhicule ayant un conducteur/passager ou objet associé, par l'unité de détermination (160),
- activer un dispositif de force antagoniste de portière de véhicule (300) pour créer une force contre l'ouverture de la portière de véhicule si l'espace de portière de véhicule disponible est inférieur à un espace de portière de véhicule minimum nécessaire pour chaque portière de véhicule ayant un passager ou objet associé.

14. Système d'assistance de sortie de véhicule (100) selon la revendication 12 ou 13, dans lequel le dispositif de force antagoniste de portière de véhicule (300) est une serrure de portière pour verrouiller la portière de véhicule, telle qu'un verrouillage enfant qui empêche l'ouverture de la portière de véhicule.

15. Programme informatique, comprenant des moyens de code lisibles par ordinateur qui, lorsqu'ils sont exécutés dans un système d'assistance de sortie de véhicule (100) connecté, agencé pour optimiser la sortie d'au moins un objet du véhicule (270) pendant le stationnement, amène le système d'assistance de sortie de véhicule (100) à effectuer le procédé selon l'une quelconque des revendications 1 à 10.

16. Produit de programme informatique, comprenant un support lisible par ordinateur et un programme informatique selon la revendication 15, dans lequel le programme informatique est stocké sur le support lisible par ordinateur.

17. Véhicule (270) comprenant un système d'assistance de sortie de véhicule (100) selon l'une quelconque des revendications précédentes 12 à 14.
